(19) **Europäisches Patentamt European Patent Office Office européen des brevets**

(11) **EP 4 573 495 B1**

(12) **EUROPEAN PATENT SPECIFICATION**

(45) Date of publication and mention
of the grant of the patent:
**17.06.2026 Bulletin 2026/25**

(21) Application number: **23764739.1**

(22) Date of filing: **19.08.2023**

(51) International Patent Classification (IPC):
*G06N 10/40* (2022.01)    *G06N 10/60* (2022.01)

(52) Cooperative Patent Classification (CPC):
**G06N 10/40; G06N 10/60;** G06N 3/08

(86) International application number:
**PCT/SE2023/050842**

(87) International publication number:
**WO 2024/039284 (22.02.2024 Gazette 2024/08)**

(54) **TIME-MULTIPLEXED ACOUSTIC ISING MACHINE**

ZEITMULTIPLEXIERTE AKUSTISCHE ISING-MASCHINE

MACHINE D'ISING ACOUSTIQUE MULTIPLEXÉE DANS LE TEMPS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.08.2022 SE 2250979
11.05.2023 SE 2330212**

(43) Date of publication of application:
**25.06.2025 Bulletin 2025/26**

(73) Proprietor: **Spinwave Computing AB**
**191 35 Sollentuna (SE)**

(72) Inventors:
• **LITVINENKO, Artem**
**41671 Göteborg (SE)**
• **KHYMYN, Roman**
**43731 Lindome (SE)**
• **ÅKERMAN, Johan**
**19135 Sollentuna (SE)**

(74) Representative: **Henricson Briggs, David James
et al**
**Pine IPR AB**
**Stena Center 1A-D**
**412 92 Göteborg (SE)**

(56) References cited:
**US-A1- 2022 209 872**

• **MANZANEQUE TOMAS ET AL: "Low-Loss and
Wideband Acoustic Delay Lines", IEEE
TRANSACTIONS ON MICROWAVE THEORY AND
TECHNIQUES, IEEE, USA, vol. 67, no. 4, 1 April
2019 (2019-04-01), pages 1379 - 1391,
XP011717406, ISSN: 0018-9480, [retrieved on
20190402], DOI: 10.1109/TMTT.2019.2900246**

**Description**

Field of the Invention

The disclosed invention generally relates to non-von-Neuman computing architectures and more particularly to a combinatorial acoustic Ising-model solver using the physical annealing method.

Background of the invention

The Ising Model (S. Kirkpatrick, C. D. Gelatt, M. P. Vecchi, Science 220, 671, 1983) is an efficient computational tool that can be used to solve a variety of difficult computational problems time- and hardware-efficiently by using its physical implementation - Ising machine. Ising model manifests that if there is a magnetic structure that is made of an array of magnetic domains and each domain is either up or down $c_i$, $c_j$: +1 *or* - 1 magnetic spin and they are coupled to each other through a magnetic field with a coefficient $J_{ij}$, one can calculate the energy of the whole system by simple summation of the product of each spin state in the pairs and their coupling:

$$E = - \sum_{i,j} J_{ij} c_i c_j \qquad (1)$$

The Ising problem is to find for a given magnetic structure with particular coupling between elements, a unique configuration of spins (up or down) so that the whole magnetic structure has the lowest energy state. The Ising problems belong to the category of so-called NP-hard computational problems (F. Barahona, Journal of Physics A: Mathematical and General 15, 3241, 1982). The term hard means that this problem is representative of the whole class of NP and can be mapped to an Ising machine.

An Ising machine can be implemented with a physical system that is made of an array of elements where each element has two well-defined and stable states that can be either +1 or -1 to represent an Ising spin and where each element can be connected to any other with a variable coefficient. By setting different coefficients one can program this machine to solve a particular Ising problem. An Ising machine when turned on tends to go into the lowest energy state by flipping the states of individual spins. The final configuration of the spins coincides with the ground state of the Ising problem and represents its solution.

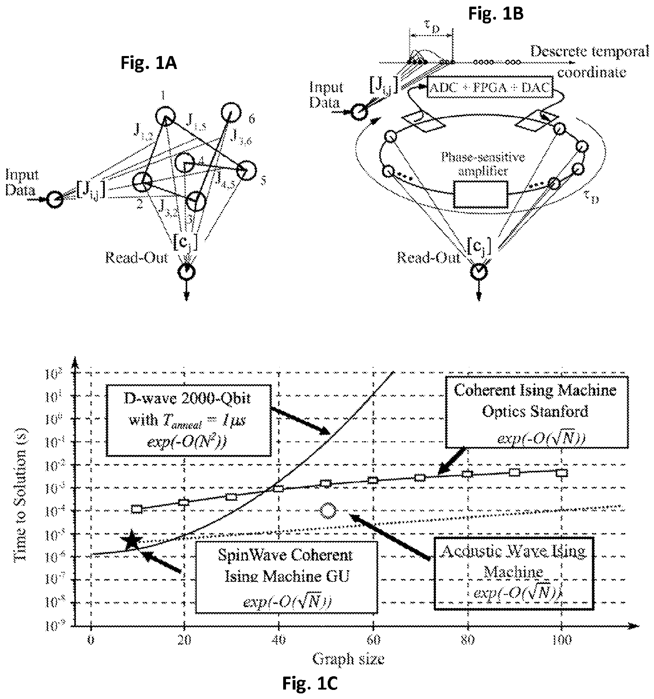

To date, Ising machines have been implemented with many physical paradigms, including quantum annealing (Johnson, M., Amin, M., Gildert, S. et al. Quantum annealing with manufactured spins. Nature 473, 194-198, 2011 & Davide Venturelli, Salvatore Mandrà, Sergey Knysh, Bryan O'Gorman, Rupak Biswas, and Vadim Smelyanskiy. Phys. Rev. X 5, 031040 - Published 18 September 2015), optical parametric oscillators (McMahon, Peter L., Alireza Marandi, Yoshitaka Haribara, Ryan Hamerly, Carsten Langrock, Shuhei Tamate, Takahiro Inagaki et al. A fully programmable 100-spin coherent Ising machine with all-to-all connections. Science 354, no. 6312, 2016:614-617 & Inagaki, Takahiro, Yoshitaka Haribara, Koji Igarashi, Tomohiro Sonobe, Shuhei Tamate, Toshimori Honjo, Alireza Marandi et al. A coherent Ising machine for 2000-node optimization problems. Science 354, no. 6312, 2016: 603-606 & Honjo, Toshimori, Tomohiro Sonobe, Kensuke Inaba, Takahiro Inagaki, Takuya Ikuta, Yasuhiro Yamada, Takushi Kazama et al. 100,000-spin coherent Ising machine. Science advances 7, no. 40, 2021), phase transition nano-oscillators (Dutta, S., A. Khanna, J. Gomez, K. Ni, Z. Toroczkai, and S. Datt. Experimental demonstration of phase transition nano-oscillator based Ising machine. In 2019 IEEE International Electron Devices Meeting IEDM, pp. 37-8. IEEE, 2019), stochastic nanomagnets (Sutton, Brian, Kerem Yunus Camsari, Behtash Behin-Aein, and Supriyo Datt. Intrinsic optimization using stochastic nanomagnets Scientific reports 7, no. 1, 2017: 1-9), electronic CMOS SRAM (M. Yamaoka, C. Yoshimura, M. Hayashi, T. Okuyama, H. Aoki and H. Mizun, A 20k-Spin Ising Chip to Solve Combinatorial Optimization Problems With CMOS Annealing in IEEE Journal of Solid-State Circuits, vol. 51, no. 1, pp. 303-309, Jan. 2016, doi: 10.1109/JSSC.2015.2498601), electronic LC oscillators ( Tianshi Wang, Leon Wu, and Jaijeet Roychowdhury. 2019. New Computational Results and Hardware Prototypes for Oscillator-based Ising Machines. In Proceedings of the 56th Annual Design Automation Conference 2019. Association for Computing Machinery, New York, NY, USA, Article 239, 1-2. & Wang, Tianshi and Jaijeet S. Roychowdhury. "OIM: Oscillator-based Ising Machines for Solving Combinatorial Optimisation Problems" UCNC, 2019), propagating spinwave (Litvinenko, A., Khymyn, R., González, V. H., Awad, A. A., Tyberkevych, V., Slavin, A., and Åkerman, J. (2022). A spinwave Ising machine. arXiv preprint arXiv:2209.04291) and spin-Hall nano-oscillators (Albertsson, Dagur Ingi, Mohammad Zahedinejad, Afshin Houshang, Roman Khymyn, Johan Åkerman, and Ana Rus". Ultrafast Ising Machines using spin torque nano-oscillators. Applied Physics Letters 118, no. 11, 2021 & . McGoldrick, Brooke C., Jonathan Z. Sun, and Luqiao Li. Ising machine based on electrically coupled spin Hall nano-oscillators. Physical Review Applied 17, no. 1, 2022). All the concepts are characterized by different speeds, power consumption, number of supported spins, physical dimension, etc. but can still be divided into two distinct groups - spatially distributed oscillator arrays and time-multiplexed soliton systems as shown in figure 1A and 1B.

US 2022/209872 A1 (Li Ming et al.) discloses a microwave photonic Ising machine comprising a microwave pulse local oscillator source configured to generate and input a microwave pulse signal to a phase and electro-optical conversion module, and a photoelectric conversion module, within a loop.

The most important parameters for Ising Machines are the time to solution and the number of supported spins, and these parameters are strongly interconnected. In FIG.1C we present time to solution as a function of annealing time and problem size N. For Ising Machines based on physical arrays of oscillators the main problem is interconnectivity because as the number of oscillators N grows the number of intersections between coupling lines increases dramatically as - $O(N^2)$. This problem is solved by grouping the elements with a sparse connection into a so-called chimera graph. However, it trades off the computational time-to-solution which in the case of the chimera graph connection scheme increases as - $O(N^2)$ (FIG.1C). It is the same growth rate as the computation speed of classical computers based on a von-Neuman architecture which means that there is no principal computational advantage in using Ising Machines built with spatially distributed oscillators.

For Coherent Ising Machines based on propagating light pulses and Spinwave Ising Machines based on propagating spinwave RF pulses the interconnectivity for a problem of all-to-all or densely connected spins is easily solved with the time-multiplexing method. Computational problems with all-to-all connected spins are characterized by the computational time that grows as - $O(\sqrt{N})$ when solved on physical Ising Machines. Therefore, the time multiplexing method makes computational time to solution for Ising problems with a large (>50) number of spins reasonable. The first time-multiplexing Ising Machine was implemented with optical parametric oscillators (OPOs) that are in the form of propagating light pulses in optical waveguides. The interconnectivity is implemented electrically (FIG.1B) by consecutive measurements of each propagating light pulses-OPOs and then adding to the additional small (r << 1) contributions according to the coefficients in Ising problem:

$$f_i = r \sum_j J_{ij} c_j$$

$$(2)$$

$$J_{ij} = \begin{Bmatrix} J_{11} & \cdots & J_{1j} \\ \vdots & \ddots & \vdots \\ J_{i1} & \cdots & J_{ij} \end{Bmatrix}$$

$$(3)$$

For the moment, time-multiplexed IMs seem to be the most promising Ising Machine configuration for combinatorial problems with large (> 50 number of elements) due to - $O(\sqrt{N})$ computational speed. Even SHNO-based Ising Machines that are projected to provide unprecedented computational speed starting from tens of nanoseconds cannot compete with Coherent Ising Machines for a graph size above 50 as they belong to -$O(N^2)$ class of IM. The number of supported elements in Ising problems solved by optical CIMs was progressively growing from 100 (McMahon, Peter L et al. 2016) spins through 2000 (Inagaki, Takahiro et al. 2016) and recently a CIM supporting 100000 spins was reported (Honjo, Toshimori et al. 2021). However, despite clear progress in the number of supported spins, current CIMs are still not in the market as they have a considerable disadvantage of size, large power consumption, and, most importantly, costly optical infrastructure requiring optical tables, precise positioners, etc. This motivated the present inventors' work on spinwave Ising machines (SWIM) (Litvinenko, A. et al. 2022) which allows sufficient reduction in power consumption due to multiphysical design and miniaturization due to low propagational speed of spinwaves. However, SWIM suffers from spinwave dispersion that broadens propagating spinwave RF pulses and limits the spin capacity.

Summary of the invention

Accordingly, the present invention preferably seeks to mitigate, alleviate or eliminate one or more of the above-identified deficiencies in the art and disadvantages singly or in any combination and solves at least the above mentioned problems by providing an acoustic Ising computational machine, AWIM, comprising: a ring circuit comprising: an acoustic line for propagating a plurality artificial Ising spinwave ultrasonic or RF pulses, an electronic phase-sensitive amplifier electrically connected to the acoustic delay line configured to cause phase degeneracy of the plurality of propagating artificial Ising spinwave pulses. A measuring unit in connection with the ring circuit, the measuring unit configured to measure the phase of each of the plurality of artificial Ising spinwave pulses. An interaction unit for implementing the magnitude and phase of the interactions corresponding to the artificial spinwave pulses. The AWIM comprising an annealing and computing unit configured to perform annealing of the plurality of artificial Ising spinwave pulses and perform statistical analysis on the plurality of steady-state solutions of the Ising machine.

This disclosure relates to a novel architecture of time-multiplexed Acoustic Wave Ising Machines (AWIM) for solving combinatorial optimization problems. The key element of Acoustic Wave IM (AWIM) is an acoustic delay line that is used as a waveguide where acoustic RF or ultrasonic pulses propagate and are stored. The advantage of acoustic devices is the exceptionally slow group velocity of propagating acoustics that is several orders lower than the speed of light. It allows miniaturizing of the CIM waveguide size down to the mm scale while keeping a high number of supported spins. Another advantage of the proposed invention in contrast to spinwave IMs is that acoustic waves have intrinsically linear dispersion that allows to excite very short RF or ultrasonic pulses not limited by nonlinear dispersion. AWIM also allows performing the compensation of propagation losses via low-power and power-efficient RF phase-sensitive and linear amplifiers. Acoustic delay line can be of several types including magnetoacoustic wave-based, Surface Acoustic Wave (SAW), Bulk Acoustic Wave (BAW) operating at frequencies from MHz to GHz and having delay times from ns to ms range. The transformation between acoustic RF or ultrasonic pulses to electric RF or LF pulses and back can implemented with different types of transducers - interdigital SAW and thin film BAW. The rapid measurement of RF circulating pulses can be done electrically via ready-from-the-shelf logarithmic phase and amplitude detectors or using homodyne IQ-demodulator and CORDIC algorithm implemented in microcontroller or FPGA that allows independent deduction of the phase and the amplitude of the RF or LF pulses within pulse circulation time.

An Ising model computational method is also provided.

Thus the invention is defined in the appended independent patent claims.

Further advantageous embodiments are disclosed in the appended and dependent patent claims.

Brief description of the drawings

These and other aspects, features and advantages of which the invention is capable will be apparent and elucidated from the following description of embodiments of the present invention, reference being made to the accompanying drawings, in which

Fig. 1A. is a spatially distributed oscillator array Ising Machine.

Fig. 1B is a time-multiplexed Ising Machine.

Fig. 1C is a graph showing time to solution as a function of annealing time and problem size N, showing a comparison between existing solutions to the present disclosure, which is shown as the dashed line labelled Acoustic Ising Machine GU.

Fig. 2 is a block diagram of an Acoustic Ising Machine according to an aspect. The block diagram shows interconnections and interactions between elements of the Acoustic Ising Machine.

Fig. 3A is a schematic diagram of a magnetoelastic implementation of an Acoustic Delay line.

Fig. 3B is a schematic diagram of a surface acoustic wave implementation of an Acoustic Delay line.

Fig. 3C is a schematic diagram of a bulk acoustic wave implementation of an Acoustic Delay line.

Fig. 4 shows the $S_{21}$-parameter of an acoustic delay line.

Fig. 5 shows the amplification of the phase-sensitive amplification block as a function of phase difference between circulating RF pulses and a reference signal.

Fig. 6 shows time traces of envelop of amplitude of circulating RF pulses, their instantaneous phase and a control signal loop amplification and calculated Ising Energy.

Fig. 7 shows graphs A, B and C for 16-spin MAX-CUT test problem and the corresponding probabilities of possible solutions.

Fig. 8A shows graphs B2 for 50-spin MAX-CUT test problem and the corresponding probabilities of possible solutions.

Fig. 8B shows graphs B2 for 50-spin MAX-CUT test problem and the corresponding probabilities of possible solutions.

Detailed description

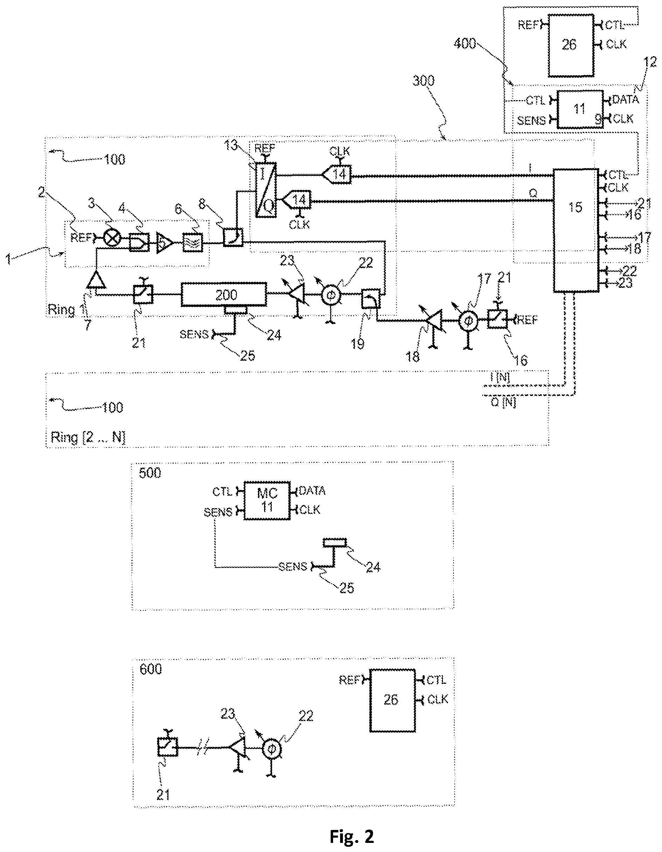

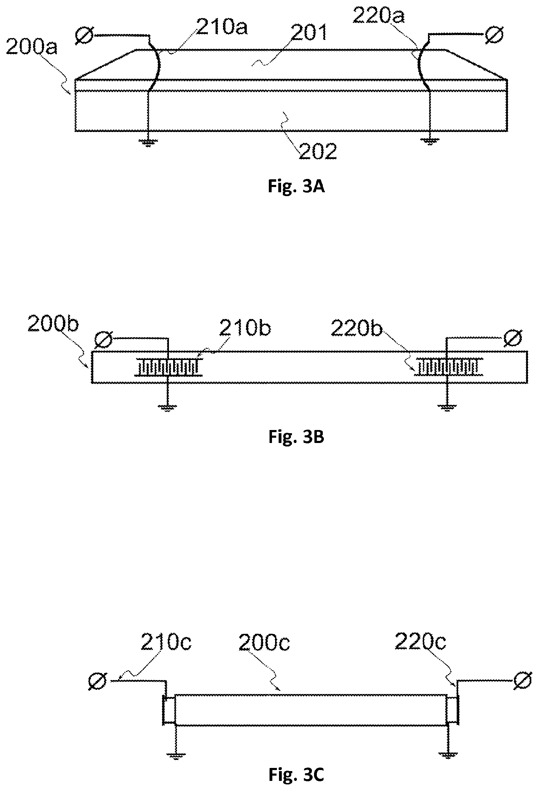

Figures 2 and 3A-C show a time multiplexed acoustic wave Ising machine (AWIM). The AWIM comprises a ring circuit 100, the ring circuit 100 comprises an acoustic delay line 200 that supports up to N Ising spins in the form of propagating acoustic RF pulses. The acoustic delay line 200 can be magnetoelastic 200a, SAW 200b, or BAW 200c, based operating at different frequencies from MHz to GHz range and having delay times from ns to ms range. The AWIM comprises an electronic part 100, 300 and the physical acoustic delay line 200. The electronic part is for linear and parametric amplification of RF pulses, RF pulse interconnection, and RF pulse measurement. The RF pulses propagate as artificial Ising spin pulses in the electronic part 100, 300, 400, 500 and may be measured, amplified, interconnected via the electronic part 100, 300, 400, 500. The RF pulses propagate as acoustic RF or ultrasonic pulses in the acoustic delay line 200.

In figure 3A, the acoustic delay line 200 is a magnetoelastic substrate 200a. The magnetoelastic substrate 200A may comprise a thin film 201 covering a thicker bulk substrate 202. For example, an Yttrium Iron Garnet, YIG thin film 201 covering a Gadolinium Gallium Garnet, GGG bulk substrate 202. As shown in figure 3A, the acoustic delay line 200 is provided with input 210a and output 220a electromagnetic to spinwave transducers. The electromagnetic to spinwave transducers 210a, 220a may be a thin wire electromagnetic to spinwave transducers 210a, 220a as shown in figure 3A. The electromagnetic to spinwave input transducer 210a convert input electric pulses to spinwaves in the thin film 201. The spinwaves excite bulk acoustic waves in the bulk substrate 202. The bulk acoustic waves generate spinwaves in the thin film 201 near the output transducer 220a. The spinwaves in the thin film 201 induce electromagnetic waves at the output transducer 220a as electric signals which then propagate from the transducer 220a in the ring circuit 100.

Figure 3B shows a SAW substrate 200b. The SAW substrate 200b may be a suitable SAW propagating substrate as known within the field of SAW devices. The acoustic delay line 200b in figure 2C is provided with input 210b and output 220b SAW transducers. As is shown in figure 3B, the SAW transducers 210b, 220b may be a thin film interdigitated grating as is known within the field of SAW transducers. The input SAW transducer 210b converts the input electric pulses to SAWs in the substrate 200b. The SAWs induce electromagnetic waves at the output SAW transducer 220b, which then propagate as electric signals from the transducer 220b in the ring circuit 100.

Figure 3C shows a bulk acoustic wave propagating acoustic delay line 200c. The bulk acoustic wave propagating acoustic delay line 200c comprises a bulk acoustic wave propagating substrate 200c. The bulk acoustic wave propagating substrate 200c may be a suitable BAW propagating substrate as is known within the field. The BAW acoustic delay line 200c is provided with input 210c and output 220c electric to BAW transducers. As above, the input transducer 210c converts the electric pulses to BAWs in the substrate 200c. The output transducer 220c converts the bulk acoustic waves to electric signals, which then propagate from the transducer 220c in the ring circuit 100. The BAW transducers 210c, 220c may be for example ZnO transducers. Both RF and ultrasonic BAWs are propagated by the acoustic delay line 200c.

The AWIM comprises a phase-sensitive amplification block 1. The operating frequency $f_0$ of AIM is set by the phase-sensitive amplification block 1 via a reference signal 2 with frequency $f_{ref} = f_0$ . As shown in figure 2, the acoustic delay line 200, and the phase-sensitive amplification block 1 are comprised within a ring circuit 100 of the acoustic wave Ising machine. The losses in acoustic delay line 200 are compensated by the phase-sensitive block 1 and a linear amplifier 7. The phase of each circulating RF pulse $c_j$ is measured by deflecting 1-10% of power after a filter 6 with a directional coupler 8, and measuring the phase with an IQ-demodulator 13, 2-channel ADC 14, and a CORDIC algorithm implemented in an FPGA 15. The FPGA 15 also performs the computation of the Ising matrix and sets the coupling between each Ising spin by controlling a phase shifter 17 and variable amplifier 18 which change the phase and the amplitude of additional coupling RF pulses that are formed by an RF switch 16. Coupling RF pulses after a variable amplifier 18 are added to the circulating RF pulses in the ring circuit 100 via power coupler 19.

As shown in figure 2, the AWIM comprising an FPGA 15 comprises a microcontroller 11. The microcontroller 11 controls the FPGA 15, clock frequencies 9, performs an annealing procedure, and optionally communicates with external systems 12 via a data line. The microcontroller 11 and the FPGA therefore form an annealing and computing unit 400. The annealing and computing unit 400, comprising the microcontroller 11 and the FPGA 15 are configured to the perform annealing by restarting the circulation of the artificial Ising spin pulses.

As shown in figure 2, the FPGA 15 receives the phase of the artificial Ising spin pulses from the IQ-demodulator 13 as both I and Q components into separate input lines. The FPGA 15 controls the ring circuit 100 RF switch 21. As described above, the FPGA 15 controls the RF switch 16 providing the additional RF pulses. The FPGA 15 controls the digital phase shifter 17 and digital attenuator 18. The FPGA 15 also controls a ring phase shifter 22, and a ring attenuator 23. The ring phase shifter 22 stabilises oscillations within the ring circuit 100. The ring phase shifter 22 is advantageous as the delay time of the oscillations may change due to, for example, thermal expansion. The phase shifter 22 maintains the same accumulation of phase in the ring 100 to satisfy Barkhausen criteria for stable oscillations. The ring attenuator 23 changes the amplification in the ring 100 which is used to perform system annealing using the minimal gain principle.

RF switch 16, digital phase shifter 17, and digital attenuator 18, and RF coupler combine to form an interaction unit 350. The interaction unit 350 receives input from the FPGA 15 and is configured via the components 16, 17, 18, 19 to implement the magnitudes and phases of the interactions relating to each of the plurality of artificial Ising spin pulses.

The IQ-demodulator 13, ADC 14 and FPGA 15 form a measurement unit 300 for measuring the phase of the artificial spins propagating in the ring circuit 100. The measurement unit 300 measures the phase of each of the plurality of artificial spins propagating in the ring circuit 100. Additionally, the directional coupler 8 may be considered to be part of the measurement unit 300 as the measurement unit 300 receives the artificial spin pulses via the directional coupler 8. The measuring unit 300 is configured to measure instantaneously the phase of each of the plurality of artificial Ising spins propagating in the circuit 100. The measuring unit 300 is configured to suspend measurement after one set of measurement is completed. The measuring unit 300 restarts measurements measurement thereafter.

The AWIM may also comprise a temperature control and stabilisation unit 500. The temperature control and stabilisation unit 500 comprises a heating element 24 in physical contact with the acoustic delay line 200, and a temperature sensor 25. The temperature sensor 25 measures the temperature of the acoustic delay line 200 and transmits the temperature, or a value corresponding to the temperature, to the microcontroller 11. The microcontroller 11 can then control the heating element 24 such that the temperature of the acoustic delay line 200 is maintained within ideal operating parameters.

The AWIM may also comprise a spin stabilisation unit 600. The spin stabilisation unit 600 is configured to stabilise the reference frequency, control Barkhausen criteon of stability for each of the plurality of artificial spin pulses circulating in the ring circuit 100. The spin stabilisation unit may also adjust amplification and phase accumulation in the ring circuit 100. The spin stabilisation unit 600 comprises a phase-locked loop, PLL, frequency synthesis block 26 comprising a PLL synthesiser, a ring attenuator 23, a ring phase shifter 22, and an RF switch 21. Each of the ring attenuator 23, the ring phase shifter 22, and the RF switch 21 are connected in the ring circuit 100 and receive the output artificial Ising spin pulses from the output transducer 220.

As would be apparent from the disclosure, various electronic components of the AWIM are comprised within the measurement unit 300, the interaction unit 350, the annealing and computing unit 400, as well as the temperature stabilisation unit 500 and the spin stabilisation unit 600. The parallel use of the various components is advantageous as it enables a smaller, lower power Ising machine compared to existing devices. The terms measurement unit 300, interaction unit 350 and annealing and computing unit 400 are used to define the functional separation of various aspects of the AWIM, however, the functional separation need not correspond to the electrical or physical separation.

The number N of supported spins is proportional to the total delay time $\tau_{delay}$ in a acoustic delay line and inversely proportional to the minimum possible acoustic RF or ultrasonic pulse width $\tau_p$:

$$N = \frac{\tau_{delay}}{\tau_p} \qquad (4)$$

The minimum possible acoustic RF or ultrasonic pulse duration is limited by the 3-dB bandwidth $BW_{sw}$:

$$\tau_p \geq \frac{1}{BW_{sw}} \qquad (5)$$

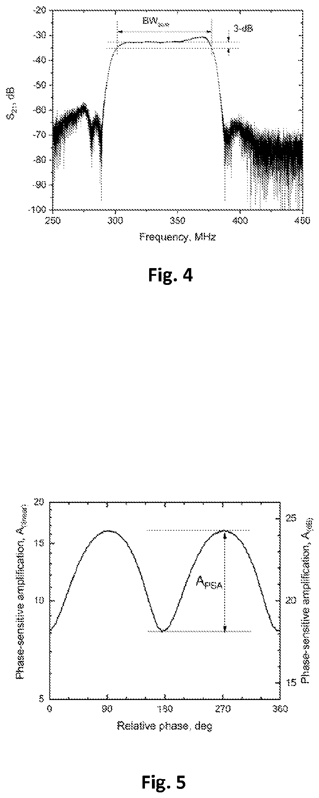

FIG.4 shows $S_{21}$-parameter of an acoustic delay line in the form of $S_{21}$-parameter. The bandwidth of the acoustic generation spectrum is 80MHz measured at -3 dB level. The mean delay time $\tau_{delay}$ is 12000 ns. The limit of minimal pulse duration derived from bandwidth is 12.5 ns. However, it is important to have at least 10 oscillations within the RF pulse which is 30ns and that results in the limit of 400 of maximum supported Ising spins in the AWIM.

Phase sensitivity is achieved by doubling the reference signal frequency via a frequency doubler 3 and combining it with an RF signal via a coupler 4 converted from acoustic RF pulses form the acoustic substrate delay line 200. The amplitude of the total signal after power divider/coupler 4 is set at a level that is close to the saturation point of an RF amplifier 5. The amplitudes of the signals at two inputs of a power divider/coupler 4 which have a relative phase close to 0° or 180° are added and the total signal amplification is affected by the saturation of the amplifier 5 more than if signals have a phase difference is close to 90° or 360°. The signal after an amplifier 5 is filtered by a highpass filter 6 with a cut of frequency $f_0$ to remove $2f_0$ signal after phase-sensitive amplification.

FIG. 5 shows the amplification of the phase-sensitive amplification block 1 as a function of a phase difference between the circulating RF pulses and the reference signal 2. The difference in amplification is denoted as $A_{PSA}$, which equals 6dB and represents the phase sensitivity of the block 1. The value of phase sensitivity can be adjusted by changing the amplitude of the reference signal at the input of the frequency multiplier.

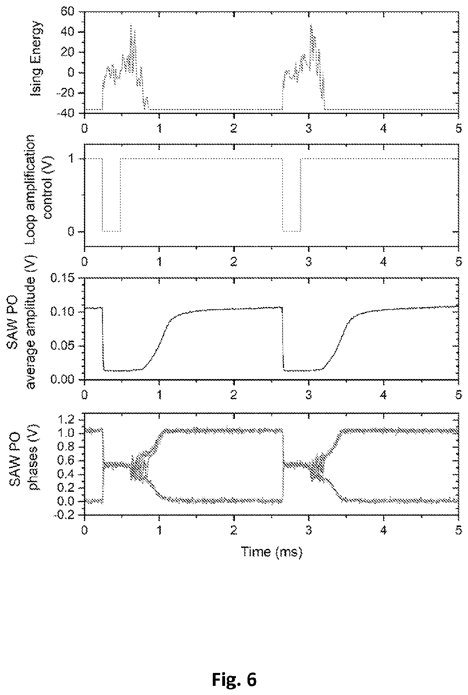

FIG. 6 shows time evolution of phases of SAW RF pulses, their average amplitude for each cycle, time traces of loop amplification control and, finally, time trace of the Ising Energy of the SAW-based IM.

Fig. 2 shows an AWIM comprising a plurality of ring circuits 100, ring 1 at the top, and ring 2 to ring N beneath as the dotted box. Each ring circuit 100 comprises a respective acoustic delay line 200, and a phase sensitive amplifier 1. Each ring circuit 100 is connected to the FPGA 15, the FPGA thus forming at least the annealing and computing unit. Due to the reduced physical and power footprint of the present ring circuit 100, multiple ring circuits 100 are practically feasible in a single AWIM. Each ring circuit may comprise a respective electric linear amplifier 7. The plurality of ring circuits 100 enables an increased number of spins to be performed by the AWIM.

Examples

*16-spin and 50-spin MAX-CUT problems with AWIM*

The following illustrative example demonstrates the physical mechanisms and routes for obtaining a solution to simple 16-spin and 50-spin MAX-CUT problem and is representative of embodiments of the schematic design, the physical parameters, and methods described herein are not meant to be limiting.

FIG. 6 shows three 16-spin MAX-CUT problems with different connection schemes which are described by the following Ising matrix:

$$
J_{ij} = \begin{pmatrix}
0 & -1 & 0 & 0 & 0 & 0 & 0 & 0 & -1 & 0 & 0 & 0 & 0 & 0 & 0 & -1 \\
-1 & 0 & -1 & 0 & 0 & 0 & 0 & 0 & 0 & -1 & 0 & 0 & 0 & 0 & 0 & 0 \\
0 & -1 & 0 & -1 & 0 & 0 & 0 & 0 & 0 & 0 & -1 & 0 & 0 & 0 & 0 & 0 \\
0 & 0 & -1 & 0 & -1 & 0 & 0 & 0 & 0 & 0 & 0 & -1 & 0 & 0 & 0 & 0 \\
0 & 0 & 0 & -1 & 0 & -1 & 0 & 0 & 0 & 0 & 0 & 0 & -1 & 0 & 0 & 0 \\
0 & 0 & 0 & 0 & -1 & 0 & -1 & 0 & 0 & 0 & 0 & 0 & 0 & -1 & 0 & 0 \\
0 & 0 & 0 & 0 & 0 & -1 & 0 & -1 & 0 & 0 & 0 & 0 & 0 & 0 & -1 & 0 \\
0 & 0 & 0 & 0 & 0 & 0 & -1 & 0 & -1 & 0 & 0 & 0 & 0 & 0 & 0 & -1 \\
-1 & 0 & 0 & 0 & 0 & 0 & 0 & -1 & 0 & -1 & 0 & 0 & 0 & 0 & 0 & 0 \\
0 & -1 & 0 & 0 & 0 & 0 & 0 & 0 & -1 & 0 & -1 & 0 & 0 & 0 & 0 & 0 \\
0 & 0 & -1 & 0 & 0 & 0 & 0 & 0 & 0 & -1 & 0 & -1 & 0 & 0 & 0 & 0 \\
0 & 0 & 0 & -1 & 0 & 0 & 0 & 0 & 0 & 0 & -1 & 0 & -1 & 0 & 0 & 0 \\
0 & 0 & 0 & 0 & -1 & 0 & 0 & 0 & 0 & 0 & 0 & -1 & 0 & -1 & 0 & 0 \\
0 & 0 & 0 & 0 & 0 & -1 & 0 & 0 & 0 & 0 & 0 & 0 & -1 & 0 & -1 & 0 \\
0 & 0 & 0 & 0 & 0 & 0 & -1 & 0 & 0 & 0 & 0 & 0 & 0 & -1 & 0 & -1 \\
-1 & 0 & 0 & 0 & 0 & 0 & 0 & -1 & 0 & 0 & 0 & 0 & 0 & 0 & -1 & 0
\end{pmatrix} \qquad (7a)
$$

$$
J_{ij} = \begin{pmatrix}
0 & -1 & -1 & -1 & 0 & 0 & 0 & 0 & 0 & 0 & 0 & 0 & 0 & 0 & 0 & 0 \\
-1 & 0 & -1 & 0 & -1 & 0 & 0 & 0 & 0 & 0 & 0 & 0 & 0 & 0 & 0 & 0 \\
-1 & -1 & 0 & 0 & 0 & -1 & 0 & 0 & 0 & 0 & 0 & 0 & 0 & 0 & 0 & 0 \\
-1 & 0 & 0 & 0 & 0 & 0 & -1 & -1 & 0 & 0 & 0 & 0 & 0 & 0 & 0 & 0 \\
0 & -1 & 0 & 0 & 0 & 0 & -1 & 0 & -1 & 0 & 0 & 0 & 0 & 0 & 0 & 0 \\
0 & 0 & -1 & 0 & 0 & 0 & -1 & 0 & 0 & -1 & 0 & 0 & 0 & 0 & 0 & 0 \\
0 & 0 & 0 & -1 & -1 & -1 & 0 & 0 & 0 & 0 & 0 & 0 & 0 & 0 & 0 & 0 \\
0 & 0 & 0 & -1 & 0 & 0 & 0 & 0 & 0 & 0 & -1 & 0 & 0 & 0 & 0 & 0 \\
0 & 0 & 0 & 0 & -1 & 0 & 0 & 0 & 0 & 0 & 0 & -1 & 0 & 0 & 0 & 0 \\
0 & 0 & 0 & 0 & 0 & -1 & 0 & 0 & 0 & 0 & 0 & 0 & -1 & -1 & 0 & 0 \\
0 & 0 & 0 & 0 & 0 & 0 & 0 & -1 & 0 & 0 & 0 & 0 & -1 & 0 & -1 & 0 \\
0 & 0 & 0 & 0 & 0 & 0 & 0 & 0 & -1 & 0 & 0 & 0 & -1 & 0 & 0 & -1 \\
0 & 0 & 0 & 0 & 0 & 0 & 0 & 0 & 0 & -1 & -1 & -1 & 0 & 0 & 0 & 0 \\
0 & 0 & 0 & 0 & 0 & 0 & 0 & 0 & 0 & -1 & 0 & 0 & 0 & 0 & -1 & -1 \\
0 & 0 & 0 & 0 & 0 & 0 & 0 & 0 & 0 & 0 & -1 & 0 & 0 & -1 & 0 & -1 \\
0 & 0 & 0 & 0 & 0 & 0 & 0 & 0 & 0 & 0 & 0 & -1 & 0 & -1 & -1 & 0
\end{pmatrix} \qquad (7b)
$$

$$
J_{ij} = \begin{pmatrix}
0 & -1 & -1 & -1 & 0 & 0 & 0 & 0 & 0 & 0 & 0 & 0 & 0 & 0 & 0 & 0 \\
-1 & 0 & 0 & 0 & -1 & -1 & 0 & 0 & 0 & 0 & 0 & 0 & 0 & 0 & 0 & 0 \\
-1 & 0 & 0 & 0 & 0 & 0 & -1 & -1 & 0 & 0 & 0 & 0 & 0 & 0 & 0 & 0 \\
-1 & 0 & 0 & 0 & 0 & 0 & 0 & 0 & -1 & -1 & 0 & 0 & 0 & 0 & 0 & 0 \\
0 & -1 & 0 & 0 & 0 & 0 & -1 & 0 & 0 & 0 & -1 & 0 & 0 & 0 & 0 & 0 \\
0 & -1 & 0 & 0 & 0 & 0 & 0 & 0 & -1 & 0 & 0 & -1 & 0 & 0 & 0 & 0 \\
0 & 0 & -1 & 0 & -1 & 0 & 0 & 0 & 0 & 0 & 0 & 0 & -1 & 0 & 0 & 0 \\
0 & 0 & -1 & 0 & 0 & 0 & 0 & 0 & 0 & 0 & 0 & -1 & 0 & -1 & 0 & 0 \\
0 & 0 & 0 & -1 & 0 & -1 & 0 & 0 & 0 & 0 & 0 & 0 & 0 & 0 & -1 & 0 \\
0 & 0 & 0 & -1 & 0 & 0 & 0 & 0 & 0 & 0 & 0 & 0 & -1 & 0 & 0 & -1 \\
0 & 0 & 0 & 0 & -1 & 0 & 0 & 0 & 0 & 0 & 0 & 0 & 0 & -1 & 0 & -1 \\
0 & 0 & 0 & 0 & 0 & -1 & 0 & -1 & 0 & 0 & 0 & 0 & 0 & 0 & 0 & -1 \\
0 & 0 & 0 & 0 & 0 & 0 & -1 & 0 & 0 & -1 & 0 & 0 & 0 & 0 & -1 & 0 \\
0 & 0 & 0 & 0 & 0 & 0 & 0 & -1 & 0 & 0 & -1 & 0 & 0 & 0 & -1 & 0 \\
0 & 0 & 0 & 0 & 0 & 0 & 0 & 0 & -1 & 0 & 0 & 0 & -1 & -1 & 0 & 0 \\
0 & 0 & 0 & 0 & 0 & 0 & 0 & 0 & 0 & -1 & -1 & -1 & 0 & 0 & 0 & 0
\end{pmatrix} \qquad (7c)
$$

The problem (7) is mapped into the AWIM using an FPGA Xilinx Spartan-6 XC6SLX9. The FPGA 15 controls the amplitude and phase of the coupling RF pulses via a variable amplifier 18 and a phase shifter 17 according to the following equation

$$f_i = r \sum_i J_{ij} c_j \qquad\qquad (8)$$

The measurement block 300 comprising components 13, 14, 15 reads the instantaneous phase at the centre of each RF pulse, rounds its value, and processes the data as an intermediate state of the Ising system.

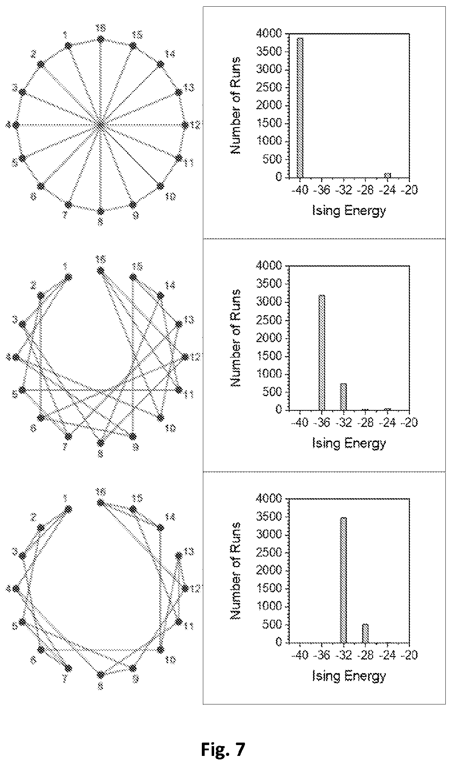

FIG. 7 also shows the statistics obtained with a SAW-based IM operating at 350MHz of central frequency and 12µs of the total delay time.

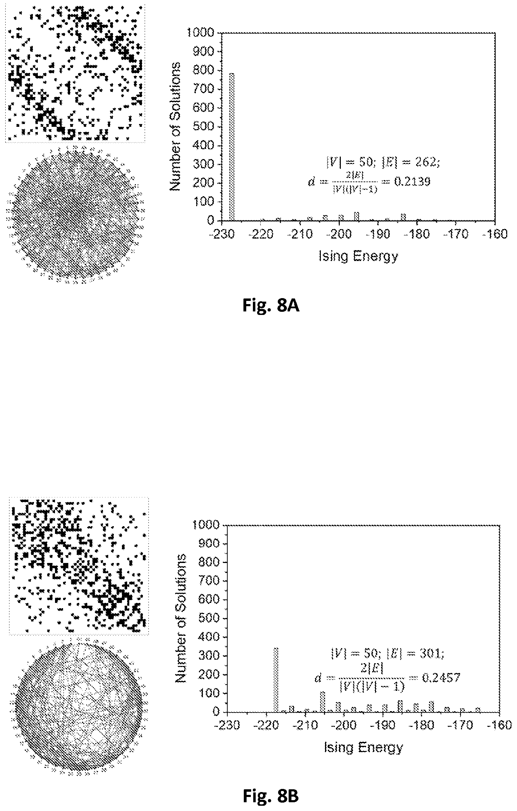

FIG. 8A and 8B show two 50-spin MAX-CUT problems and representation of their coupling matrices in the form of greyscale maps.

FIG. 8A and 8B also show the statistics obtained with a SAW-based IM operating at 350MHz of central frequency and 12us of the total delay time.

Although, the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

List of references used in the figures:

| Reference Numbers (Fig 2) | Element |
|---|---|
| 1 | Phase sensitive amplifier block |
| 2 | Reference signal |
| 3 | Frequency doubler |
| 4 | Power divider 1:1 |
| 5 | RF amplifier |
| 6 | Highpass filter |
| 7 | RF Amplifier |
| 8 | RF coupler 1:10 |
| 9 | Clock line |
| 10 | Control line |
| 11 | Microcontroller |
| 12 | Data line |
| 13 | I and Q demodulator |
| 14 | Analog to Digital Converter |
| 15 | Field-Programmable Gate Array |
| 17 | Digital phase shifter |
| 18 | Digital attenuator |
| 19 | RF coupler 1:10 |
| 200 | Acoustic delay line |
| 210a,b,c | Input transducer |
| 220a,b,c | Output transducer |
| 21 | RF switch |
| 22 | Loop phase shifter |

(continued)

| Reference Numbers (Fig 2) | Element |
|---|---|
| 23 | Loop attenuator |
| 24 | Heating element |
| 25 | Temperature sensor |
| 26 | PLL frequency synthesis block |

**Claims**

1. A time-multiplexed Ising computational machine, AWIM, comprising:

   - a ring circuit (100), the ring circuit (100) comprising:
   - an acoustic delay line (200) for propagating a plurality of artificial Ising spin pulses as parametric acoustic oscillators, and,
   - an electronic phase-sensitive amplifier (1) in connection with the acoustic delay line (200), the phase-sensitive amplifier (1) configured to cause phase degeneracy of the plurality of propagating acoustic pulses corresponding to a plurality of artificial spins in the Ising model, and to set an oscillation frequency corresponding to half a reference frequency, the reference frequency being provided by a reference signal;

   the AWIM also comprising:

   - a measuring unit (300) in connection with the ring circuit (100), the measuring unit (300) configured to measure the phase of each of the plurality of artificial Ising spinwave pulses each time the plurality of pseudo spin pulses circularly propagates in the ring circuit (100);
   - an interaction unit (400) in connection with the ring circuit (100), the interaction unit (400) for implementing the magnitude and phase of the interactions corresponding to the artificial spinwave pulses; and,
   - an annealing and computing unit (350) in connection with the ring circuit (100), the annealing and computing unit (350) configured to perform annealing of the plurality of artificial Ising spinwave pulses and perform statistical analysis on the plurality of steady-state solutions of the Ising machine.

2. The AWIM according to claim 1, wherein the acoustic delay line (200) is a magnetoelastic acoustic delay line (200a), a surface acoustic wave, SAW, delay line (200b), or a bulk acoustic wave, BAW, delay line (200c).

3. The AWIM according to claims 1 or 2, wherein the acoustic delay line (200) comprises an input transducer (210) for converting electric signals from the ring circuit (100) to propagating waves in the acoustic delay line (200) and/or an output transducer (220) for converting propagating waves to electrical signals for propagation in the ring circuit (100).

4. The AWIM according to claims 1 to 3, wherein the AWIM comprises a temperature control and stabilization unit (500) for controlling and stabilizing the temperature of the acoustic delay line (20), the temperature control and stabilisation unit (500) comprising a heating element (24) physically connected to the acoustic delay line (200) and temperature sensor (25) for measuring the temperature of the acoustic delay line (200).

5. The AWIM according to claims 1 to 4, wherein the AWIM comprises a spin stabilization unit (600), the spin stabilisation unit (600) in electrical connection with the ring circuit (100) and interaction unit (400), and configured to stabilize the reference frequency, control Barkhausen criterion of stability for the plurality of artificial Ising spin pulses circulating in the ring circuit (100), and adjust the amplification and phase accumulation in the ring circuit (100).

6. The AWIM according to claims 1 to 5, wherein the measuring unit (300) is configured to instantaneously and repeatedly measure the phase of the plurality of artificial spin pulses propagating in the ring circuit (100).

7. The AWIM according to any of claims 1 to 6, wherein the acoustic delay line (200) is a magnetoelastic acoustic delay line (200a), and wherein the acoustic delay line (200a) comprises thin wire input and output and output transducers, and wherein the acoustic delay line (200a) comprises a thin film substrate (201) for propagating artificial spin waves, and a bulk substrate (202) for propagating bulk acoustic waves.

8. The AWIM according to any of claims 1 to 7, wherein the acoustic delay line (20) comprises an acoustic wave propagating material in which RF or ultrasonic pulses propagate at a speed substantially less than the speed of light.

9. The AWIM according to any of claims 1 to 8, wherein the AWIM comprises a field programmable gate array, FPGA, (15) configured to map an Ising problem onto propagating acoustic RF or ultrasonic pulses by connecting them, the connecting occurring via applying to each RF or ultrasonic pulse, an additional coupling RF or ultrasonic pulse with an amplitude and phase defined by a coupling matrix.

10. The AWIM according to any of claims 1 to 9, wherein the parametric acoustic oscillators are time-multiplexed in a single acoustic delay line.

11. The AWIM according to any of claims 1 to 10, wherein the AWIM comprises a plurality of ring circuits (100), each ring circuit (100) comprising a respective acoustic delay line (200) and phase-sensitive amplifier (1).

12. An Ising model computation method comprising:

- receiving in a ring circuit (100) an electromagnetic RF pulse, the ring circuit (100) comprising an acoustic delay line (200),
- transforming the electromagnetic RF pulse to an acoustic artificial Ising spinwave pulse in the acoustic delay line (200) via an input transducer (210);
- transforming the acoustic artificial Ising spinwave pulse from the acoustic delay line (200) to an artificial Ising spinwave RF pulse via an output transducer (220);
- phase degenerating the artificial Ising spinwave RF pulse and setting an oscillation frequency corresponding to half a reference frequency provided by a reference signal via a phase-sensitive amplifier (1);
- receiving the artificial spinwave Ising RF pulse at an interaction unit (400) connected to the ring circuit (100) and, implementing the magnitude and phase of the interactions corresponding to the artificial spinwave RF pulse via the interaction unit (400);
- measuring the phase of the artificial Ising spinwave RF pulse as the pulse propagates in the ring circuit (100) via a measuring unit (300) connected to the ring circuit (100); and,
- annealing the artificial Ising spinwave RF pulse and performing statistical analysis on the steady-state solutions of the Ising machine via an annealing and computing unit (350) connected to the ring circuit (100).

13. The method according to claim 12, wherein the measuring unit (300) receives each propagated artificial spinwave RF pulse after the measuring unit (300) completes one set of measurement and before the measuring unit (300) restarts another set of measurement.

14. The method according to claim 12 or 13, wherein the method comprises receiving a plurality of microwave RF pulses in the ring circuit (100).

15. The method according to any of claims 12 to 14, wherein the method comprises delaying the propagation of an artificial Ising spinwave RF pulse in the interaction unit (400) for a duration of exactly one period of pulse repetition time in the ring circuit (100).

**Patentansprüche**

1. Zeitgemultiplexte Ising-Rechenmaschine, AWIM, umfassend:

- eine Ringschaltung (100), die Ringschaltung (100) umfassend:
- eine akustische Verzögerungsleitung (200) zum Ausbreiten einer Vielzahl von künstlichen Ising-Spinimpulsen als parametrische akustische Oszillatoren und
- einen elektronischen phasenempfindlichen Verstärker (1) in Verbindung mit der akustischen Verzögerungsleitung (200), wobei der phasenempfindliche Verstärker (1) konfiguriert ist, um eine Phasenentartung der Vielzahl von sich ausbreitenden akustischen Impulsen entsprechend einer Vielzahl von künstlichen Spins in dem Ising-Modell zu verursachen und um eine Oszillationsfrequenz entsprechend einer Hälfte einer Referenzfrequenz einzustellen, wobei die Referenzfrequenz durch ein Referenzsignal bereitgestellt wird;
die AWIM ebenso umfassend:

- eine Messeinheit (300) in Verbindung mit der Ringschaltung (100), wobei die Messeinheit (300) konfiguriert ist, um die Phase jedes der Vielzahl von künstlichen Ising-Spinwellenimpulsen jedes Mal zu messen, wenn sich die Vielzahl von Pseudospinimpulsen in der Ringschaltung (100) zirkular ausbreitet;
- eine Wechselwirkungseinheit (400) in Verbindung mit der Ringschaltung (100), wobei die Wechselwirkungseinheit (400) zum Implementieren der Größe und der Phase der Wechselwirkungen entsprechend den künstlichen Spinwellenimpulsen dient; und

eine Abkühl- und Recheneinheit (350) in Verbindung mit der Ringschaltung (100), wobei die Abkühl- und Recheneinheit (350) konfiguriert ist, um ein Abkühlen der Vielzahl von künstlichen Ising-Spinwellenimpulsen durchzuführen und eine statistische Analyse an der Vielzahl von stationären Lösungen der Ising-Maschine durchzuführen.

2. AWIM nach Anspruch 1, wobei die akustische Verzögerungsleitung (200) eine magnetoelastische akustische Verzögerungsleitung (200a), eine akustische Oberflächenwellenverzögerungsleitung, SAW-Verzögerungsleitung, (200b) oder eine akustische Volumenwellenverzögerungsleitung, BAW-Verzögerungsleitung, (200c) ist.

3. AWIM nach Anspruch 1 oder 2, wobei die akustische Verzögerungsleitung (200) einen Eingangswandler (210) zum Umwandeln elektrischer Signale von der Ringschaltung (100) in sich ausbreitende Wellen in der akustischen Verzögerungsleitung (200) und/oder einen Ausgangswandler (220) zum Umwandeln sich ausbreitender Wellen in elektrische Signale zum Ausbreiten in der Ringschaltung (100) umfasst.

4. AWIM nach den Ansprüchen 1 bis 3, wobei die AWIM eine Temperatursteuer- und -stabilisierungseinheit (500) zum Steuern und Stabilisieren der Temperatur der akustischen Verzögerungsleitung (20) umfasst, die Temperatursteuer- und -stabilisierungseinheit (500) umfassend ein Heizelement (24), das mit der akustischen Verzögerungsleitung (200) physisch verbunden ist, und einen Temperatursensor (25) zum Messen der Temperatur der akustischen Verzögerungsleitung (200).

5. AWIM nach den Ansprüchen 1 bis 4, wobei die AWIM eine Spinstabilisierungseinheit (600) umfasst, wobei die Spinstabilisierungseinheit (600) in elektrischer Verbindung mit der Ringschaltung (100) und der Wechselwirkungseinheit (400) steht und konfiguriert ist, um die Referenzfrequenz zu stabilisieren, ein Barkhausen-Stabilitätskriterium für die Vielzahl von künstlichen Ising-Spinimpulsen, die in der Ringschaltung (100) zirkuliert, zu steuern und die Verstärkung und Phasenakkumulation in der Ringschaltung (100) anzupassen.

6. AWIM nach den Ansprüchen 1 bis 5, wobei die Messeinheit (300) konfiguriert ist, um die Phase der Vielzahl von künstlichen Spinimpulsen, die sich in der Ringschaltung (100) ausbreitet, augenblicklich und wiederholt zu messen.

7. AWIM nach einem der Ansprüche 1 bis 6, wobei die akustische Verzögerungsleitung (200) eine magnetoelastische akustische Verzögerungsleitung (200a) ist und wobei die akustische Verzögerungsleitung (200a) Dünndrahteingangs- und -ausgangswandler umfasst und wobei die akustische Verzögerungsleitung (200a) ein Dünnfilmsubstrat (201) zum Ausbreiten künstlicher Spinwellen und ein Volumensubstrat (202) zum Ausbreiten von akustischen Volumenwellen umfasst.

8. AWIM nach einem der Ansprüche 1 bis 7, wobei die akustische Verzögerungsleitung (20) ein akustisches Wellenausbreitungsmaterial umfasst, in dem sich HF- oder Ultraschallimpulse mit einer Geschwindigkeit ausbreiten, die im Wesentlichen geringer als die Lichtgeschwindigkeit ist.

9. AWIM nach einem der Ansprüche 1 bis 8, wobei die AWIM ein Field Programmable Gate Array, FPGA, (15) umfasst, das konfiguriert ist, um ein Ising-Problem auf sich ausbreitende akustische HF- oder Ultraschallimpulse durch ein Verbinden dieser abzubilden, wobei das Verbinden über ein Anwenden eines zusätzlichen Kopplungs-HF- oder -Ultraschallimpulses mit einer Amplitude und Phase, die durch eine Kopplungsmatrix definiert werden, auf jeden HF- oder Ultraschallimpuls erfolgt.

10. AWIM nach einem der Ansprüche 1 bis 9, wobei die parametrischen akustischen Oszillatoren in einer einzigen akustischen Verzögerungsleitung zeitgemultiplext sind.

11. AWIM nach einem der Ansprüche 1 bis 10, wobei die AWIM eine Vielzahl von Ringschaltungen (100) umfasst, jede Ringschaltung (100) umfassend eine(n) jeweilige(n) akustische Verzögerungsleitung (200) und phasenempfindlichen Verstärker (1).

**12.** Ising-Modellberechnungsverfahren, umfassend:

- Empfangen eines elektromagnetischen HF-Impulses in einer Ringschaltung (100), die Ringschaltung (100) umfassend eine akustische Verzögerungsleitung (200),

- Transformieren des elektromagnetischen HF-Impulses in einen akustischen künstlichen Ising-Spinwellenimpuls in der akustischen Verzögerungsleitung (200) über einen Eingangswandler (210);

- Transformieren des akustischen künstlichen Ising-Spinwellenimpulses von der akustischen Verzögerungsleitung (200) in einen künstlichen Ising-Spinwellen-HF-Impuls über einen Ausgangswandler (220);

- Phasenentarten des künstlichen Ising-Spinwellen-HF-Impulses und Einstellen einer Oszillationsfrequenz entsprechend der Hälfte einer Referenzfrequenz, die durch ein Referenzsignal bereitgestellt wird, über einen phasenempfindlichen Verstärker (1);

- Empfangen des künstlichen Spinwellen-Ising-HF-Impulses an einer Wechselwirkungseinheit (400), die mit der Ringschaltung (100) verbunden ist, und Implementieren der Größe und der Phase der Wechselwirkungen entsprechend dem künstlichen Spinwellen-HF-Impuls über die Wechselwirkungseinheit (400);

- Messen der Phase des künstlichen Ising-Spinwellen-HF-Impulses, während sich der Impuls in der Ringschaltung (100) ausbreitet, über eine Messeinheit (300), die mit der Ringschaltung (100) verbunden ist; und

- Auskühlen des künstlichen Ising-Spinwellen-HF-Impulses und Durchführen der statistischen Analyse der stationären Lösungen der Ising-Maschine über eine Auskühl- und Recheneinheit (350), die mit der Ringschaltung (100) verbunden ist.

**13.** Verfahren nach Anspruch 12, wobei die Messeinheit (300) jeden ausgebreiteten künstlichen Spinwellen-HF-Impuls empfängt, nachdem die Messeinheit (300) einen Satz von Messungen abgeschlossen hat und bevor die Messeinheit (300) einen anderen Satz von Messungen neu startet.

**14.** Verfahren nach Anspruch 12 oder 13, wobei das Verfahren das Empfangen einer Vielzahl von Mikrowellen-HF-Impulsen in der Ringschaltung (100) umfasst.

**15.** Verfahren nach einem der Ansprüche 12 bis 14, wobei das Verfahren ein Verzögern der Ausbreitung eines künstlichen Ising-Spinwellen-HF-Impulses in der Wechselwirkungseinheit (400) für eine Dauer von genau einer Periode der Impulswiederholungszeit in der Ringschaltung (100) umfasst.

**Revendications**

**1.** Machine de calcul d'Ising multiplexée dans le temps, AWIM, comprenant :

- un circuit annulaire (100), le circuit annulaire (100) comprenant :
- une ligne à retard acoustique (200) pour propager une pluralité d'impulsions de spin d'Ising artificiel en tant qu'oscillateurs acoustiques paramétriques, et,
- un amplificateur électronique sensible à la phase (1) en connexion avec la ligne à retard acoustique (200), l'amplificateur sensible à la phase (1) étant configuré pour provoquer une dégénérescence de phase de la pluralité d'impulsions acoustiques se propageant correspondant à une pluralité de spins artificiels dans le modèle d'Ising, et pour définir une fréquence d'oscillation correspondant à la moitié d'une fréquence de référence, la fréquence de référence étant fournie par un signal de référence ;

l'AWIM comprenant également :

- une unité de mesure (300) en connexion avec le circuit annulaire (100), l'unité de mesure (300) étant configurée pour mesurer la phase de chacune de la pluralité d'impulsions d'ondes de spin artificiel d'Ising chaque fois que la pluralité d'impulsions de pseudo-spin se propage circulairement dans le circuit annulaire (100) ;
- une unité d'interaction (400) en connexion avec le circuit annulaire (100), l'unité d'interaction (400) permettant de mettre en œuvre l'amplitude et la phase des interactions correspondant aux impulsions d'ondes de spin artificiel ; et,
- une unité de recuit et de calcul (350) en connexion avec le circuit annulaire (100), l'unité de recuit et de calcul (350) étant configurée pour effectuer le recuit de la pluralité d'impulsions d'ondes de spin artificiel d'Ising et pour effectuer une analyse statistique de la pluralité de solutions d'état permanent de la machine d'Ising.

**2.** AWIM selon la revendication 1, dans laquelle la ligne à retard acoustique (200) est une ligne à retard acoustique magnétoélastique (200a), une ligne à retard d'ondes acoustiques de surface, SAW, (200b), ou une ligne à retard à ondes acoustiques massives, BAW (200c).

3. AWIM selon les revendications 1 ou 2, dans laquelle la ligne à retard acoustique (200) comprend un transducteur d'entrée (210) pour convertir des signaux électriques du circuit annulaire (100) en ondes propagées dans la ligne à retard acoustique (200) et/ou un transducteur de sortie (220) pour convertir des ondes propagées en signaux électriques destinés à être propagés dans le circuit annulaire (100).

4. AWIM selon les revendications 1 à 3, dans laquelle l'AWIM comprend une unité de régulation et de stabilisation de température (500) pour la régulation et la stabilisation de la température de la ligne à retard acoustique (20), l'unité de régulation et stabilisation de température (500) comprenant un élément chauffant (24) connecté physiquement à la ligne à retard acoustique (200) et un capteur de température (25) pour mesurer la température de la ligne à retard acoustique (200).

5. AWIM selon les revendications 1 à 4, dans laquelle l'AWIM comprend une unité de stabilisation de rotation (600), l'unité de stabilisation de spin (600) en connexion électrique avec le circuit annulaire (100) et l'unité d'interaction (400), et configurée pour stabiliser la fréquence de référence, commander le critère de stabilité de Barkhausen pour la pluralité d'impulsions de spin artificiel d'Ising circulant dans le circuit annulaire (100), et ajuster l'amplification et l'accumulation de phase dans le circuit annulaire (100).

6. AWIM selon les revendications 1 à 5, dans laquelle l'unité de mesure (300) est configurée pour mesurer instantanément et de manière répétée la phase de la pluralité d'impulsions de spin artificiel se propageant dans le circuit annulaire (100).

7. AWIM selon l'une quelconque des revendications 1 à 6, dans laquelle la ligne à retard acoustique (200) est une ligne à retard acoustique magnétoélastique (200a), et dans laquelle la ligne à retard acoustique (200a) comprend des transducteurs d'entrée et de sortie à fil fin, et dans laquelle la ligne à retard acoustique (200a) comprend un substrat en couche mince (201) pour propager des ondes de spin artificiel, et un substrat en masse (202) pour propager des ondes acoustiques en masse.

8. AWIM selon l'une quelconque des revendications 1 à 7, dans laquelle la ligne à retard acoustique (20) comprend un matériau propageant des ondes acoustiques dans lequel des impulsions RF ou ultrasoniques se propagent à une vitesse sensiblement inférieure à la vitesse de la lumière.

9. AWIM selon l'une quelconque des revendications 1 à 8, dans laquelle l'AWIM comprend un réseau prédiffusé programmable par l'utilisateur, FPGA, (15) configuré pour mapper un problème d'Ising sur des impulsions acoustiques RF ou ultrasoniques se propageant en les connectant, la connexion se faisant par l'intermédiaire de l'application à chaque impulsion RF ou ultrasonique, d'une impulsion RF ou ultrasonique de couplage supplémentaire avec une amplitude et une phase définies par une matrice de couplage.

10. AWIM selon l'une quelconque des revendications 1 à 9, dans laquelle les oscillateurs acoustiques paramétriques sont multiplexés dans le temps dans une seule ligne à retard acoustique.

11. AWIM selon l'une quelconque des revendications 1 à 10, dans laquelle l'AWIM comprend une pluralité de circuits annulaire (100), chaque circuit annulaire (100) comprenant une ligne à retard acoustique (200) et un amplificateur sensible à la phase (1) respectifs.

12. Procédé de calcul de modèle d'Ising comprenant :

   - la réception dans un circuit annulaire (100) d'une impulsion RF électromagnétique, le circuit annulaire (100) comprenant une ligne à retard acoustique (200),
   - la transformation de l'impulsion RF électromagnétique en une impulsion d'onde de spin artificiel d'Ising acoustique dans la ligne à retard acoustique (200) par l'intermédiaire d'un transducteur d'entrée (210) ;
   - la transformation de l'impulsion acoustique d'onde de spin artificiel d'Ising de la ligne à retard acoustique (200) en une impulsion RF d'onde de spin artificiel d'Ising par l'intermédiaire d'un transducteur de sortie (220) ;
   - la dégénération en phase de l'impulsion RF d'onde de spin artificiel d'Ising et définir une fréquence d'oscillation correspondant à la moitié d'une fréquence de référence fournie par un signal de référence par l'intermédiaire d'un amplificateur sensible à la phase (1) ;

- la réception de l'impulsion RF d'Ising d'onde de spin artificielle au niveau d'une unité d'interaction (400) connectée au circuit annulaire (100) et, la mise en œuvre de l'amplitude et de la phase des interactions correspondant à l'impulsion RF d'onde de spin artificiel par l'intermédiaire de l'unité d'interaction (400) ;
- la mesure de la phase de l'impulsion RF d'onde de spin artificiel d'Ising lorsque l'impulsion se propage dans le circuit annulaire (100) par l'intermédiaire d'une unité de mesure (300) connectée au circuit annulaire (100) ; et,
- le recuit de l'impulsion RF d'onde de spin artificiel d'Ising et le fait d'effectuer une analyse statistique sur les solutions en régime permanent de la machine d'Ising par l'intermédiaire d'une unité de recuit et de calcul (350) connectée au circuit annulaire (100).

13. Procédé selon la revendication 12, dans lequel l'unité de mesure (300) reçoit chaque impulsion RF d'onde de spin artificiel propagée après que l'unité de mesure (300) a terminé un ensemble de mesures et avant que l'unité de mesure (300) ne redémarre un autre ensemble de mesures.

14. Procédé selon la revendication 12 ou 13, dans lequel le procédé comprend la réception d'une pluralité d'impulsions RF micro-ondes dans le circuit annulaire (100).

15. Procédé selon l'une quelconque des revendications 12 à 14, dans lequel le procédé comprend le retard de la propagation d'une impulsion RF d'onde de spin artificiel d'Ising dans l'unité d'interaction (400) pendant une durée d'exactement une période de temps de répétition d'impulsions dans le circuit annulaire (100).

Fig. 1A

Fig. 1B

Fig. 1C

**Fig. 2**

Fig. 3A

Fig. 3B

Fig. 3C

**Fig. 4**

**Fig. 5**

**Fig. 6**

**Fig. 7**

**Fig. 8A**

**Fig. 8B**

**EP 4 573 495 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

Patent documents cited in the description

- US 2022209872 A1, Li Ming

**Non-patent literature cited in the description**

- **S. KIRKPATRICK** ; **C. D. GELATT** ; **M. P. VECCHI**. *Science*, 1983, vol. 220, 671
- **F. BARAHONA**. *Journal of Physics A: Mathematical and General*, 1982, vol. 15, 3241
- **JOHNSON, M.** ; **AMIN, M.** ; **GILDERT, S. et al.** Quantum annealing with manufactured spins.. *Nature*, 2011, vol. 473, 194-198
- **DAVIDE VENTURELLI** ; **SALVATORE MANDRÀ** ; **SERGEY KNYSH** ; **BRYAN O'GORMAN** ; **RUPAK BISWAS** ; **VADIM SMELYANSKIY**. *Phys. Rev.,* 18 September 2015, vol. X 5, 031040
- **MCMAHON** ; **PETER L.** ; **ALIREZA MARANDI** ; **YOSHITAKA HARIBARA** ; **RYAN HAMERLY** ; **CARSTEN LANGROCK** ; **SHUHEI TAMATE** ; **TAKAHIRO INAGAKI et al.** A fully programmable 100-spin coherent Ising machine with all-to-all connections.. *Science*, 2016, vol. 354 (6312), 614-617
- **INAGAKI, TAKAHIRO** ; **YOSHITAKA HARIBARA** ; **KOJI IGARASHI** ; **TOMOHIRO SONOBE** ; **SHUHEI TAMATE** ; **TOSHIMORI HONJO** ; **ALIREZA MARANDI et al.** A coherent Ising machine for 2000-node optimization problems.. *Science*, 2016, vol. 354 (6312), 603-606
- **HONJO, TOSHIMORI** ; **TOMOHIRO SONOBE** ; **KENSUKE INABA** ; **TAKAHIRO INAGAKI** ; **TAKUYA IKUTA** ; **YASUHIRO YAMADA** ; **TAKUSHI KAZAMA et al.** 100,000-spin coherent Ising machine. *Science advances*, 2021, vol. 7 (40)
- Experimental demonstration of phase transition nano-oscillator based Ising machine. **DUTTA, S.** ; **A. KHANNA** ; **J. GOMEZ** ; **K. NI** ; **Z. TOROCZKAI** ; **S. DATT**. 2019 IEEE International Electron Devices Meeting IEDM. IEEE, 2019, 37-8
- **SUTTON, BRIAN** ; **KEREM YUNUS CAMSARI** ; **BEHTASH BEHIN-AEIN** ; **SUPRIYO DATT**. Intrinsic optimization using stochastic nanomagnets. *Scientific reports*, 2017, vol. 7 (1), 1-9
- **M. YAMAOKA** ; **C. YOSHIMURA** ; **M. HAYASHI** ; **T. OKUYAMA** ; **H. AOKI** ; **H. MIZUN**. A 20k-Spin Ising Chip to Solve Combinatorial Optimization Problems With CMOS Annealing. *IEEE Journal of Solid-State Circuits*, January 2016, vol. 51 (1), 303-309
- New Computational Results and Hardware Prototypes for Oscillator-based Ising Machines. **TIANSHI WANG** ; **LEON WU** ; **JAIJEET ROYCHOWDHURY**. Proceedings of the 56th Annual Design Automation Conference 2019. Association for Computing Machinery, 2019, 1-2
- **WANG, TIANSHI** ; **JAIJEET S. ROYCHOWDHURY**. OIM: Oscillator-based Ising Machines for Solving Combinatorial Optimisation Problems. *UCNC*, 2019
- **LITVINENKO, A.** ; **KHYMYN, R.** ; **GONZÁLEZ, V. H.** ; **AWAD, A. A.** ; **TYBERKEVYCH, V.** ; **SLAVIN, A.** ; **ÅKERMAN, J.** A spinwave Ising machine. *arXiv:2209.04291*, 2022
- **ALBERTSSON, DAGUR INGI** ; **MOHAMMAD ZAHEDINEJAD** ; **AFSHIN HOUSHANG** ; **ROMAN KHYMYN** ; **JOHAN ÅKERMAN** ; **ANA RUS**. Ultrafast Ising Machines using spin torque nano-oscillators.. *Applied Physics Letters*, 2021, vol. 118 (11)
- **MCGOLDRICK, BROOKE C.** ; **JONATHAN Z. SUN** ; **LUQIAO LI**. Ising machine based on electrically coupled spin Hall nano-oscillators.. *Physical Review Applied*, 2022, vol. 17 (1)